# EUROPEAN PATENT APPLICATION

(11) **EP 1 108 927 A2**
(43) Date of publication of application: **20.06.2001**
(21) Application number: 00850212.2
(22) Date of filing: 14.12.2000
(51) Int. Cl.: F16J 15/32

(54) **A sealing arrangement**

(30) Priority: 17.12.1999 SE 9904640
(71) Applicant: SKF Nova AB, 412 88 Göteborg (SE)
(72) Inventor: Sjöström, Hans, 411 25 Göteborg (SE); Andersson, Börje, 431 39 Mölndal (SE)
(74) Representative: Westman, P. Börje I.

(57) **Abstract**

The invention refers to a sealing arrangement for sealing off a space between two machine members (1, 2) which are movable relative to each other, which sealing arrangement incorporates a seal (3) fitted to one of the machine members (2), and having a sealing edge (4) arranged to contact a counter surface (6) on the other one of the machine members (1) to slide against this during mutual movement of the machine members, and where a groove pattern (7) is provided at the area of contact between the sealing edge (4) and the counter surface (6) for causing a pumping effect in said area of contact, wherein the groove pattern (7) is provided in the counter surface (6) opposed to said sealing edge (4).

## Description

The present invention relates to a sealing arrangement between two machine members, which are movable in relation to each other, and incorporating at least one sealing lip in sliding contact with a counter-surface on the other machine member.

For some sliding sealing applications it is desirous to provide a structure or a pattern in the contact for causing a so called lift-off, i.e. a repelling action for preventing foreign matters, such as dirt. At bearing seals it also can be used for optimizing the lubrication properties, and in such cases this has earlier been achieved in that the sealing lip, which is made of rubber or an elastomer, has been provided with a groove pattern in the contact area, creating a pumping effect, when the sealing member and its counter-surface are moving relative to each other.

This has proven itself to give a good effect, but it is a drawback, that the comparatively soft and wear-sensitive material of the sealing lip will be worn rapidly during the sliding contact with the smooth counter-surface, whereupon the effect of the groove pattern will be rapidly reduced and soon completely lost.

The purpose of the present invention is to provide a sealing arrangement substantially eliminating the above mentioned problem, and this is achieved in that the sealing arrangement is given the features defined in the characterizing part of the accompanying claim 1.

Hereinafter the invention will be further described with reference to a non-limiting embodiment illustrated in the accompanying drawings.

Fig. 1 shows in cross section a fragmentary view of a shaft sealed of with a sealing arrangement in accordance with the invention, and
Fig. 2 shows in perspective and in bigger scale a small portion of the sealing arrangement shown in Fig. 1.

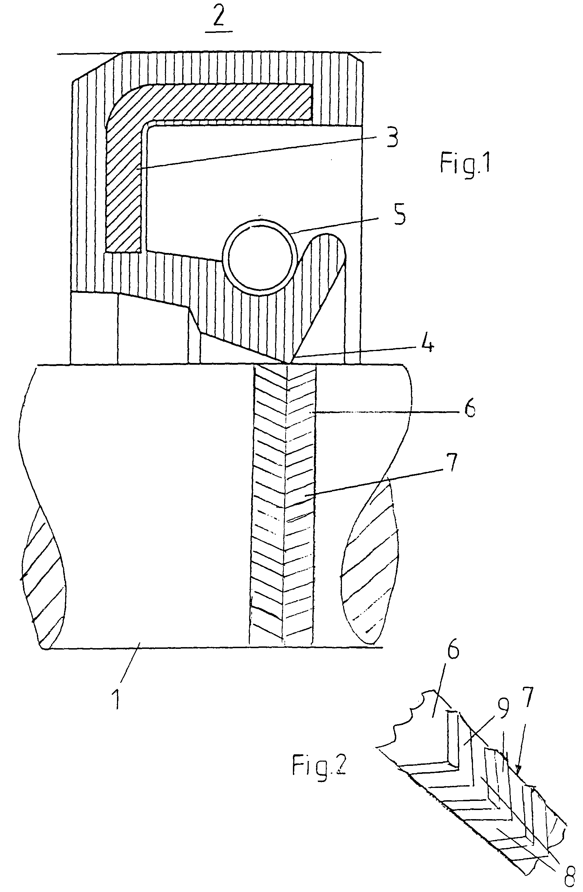

Fig. 1 shows a portion of a shaft 1 which is rotatably supported (not shown) in a housing intimated at 2, in which housing is fitted an annular seal 3 of any known type having a sealing lip or edge 4, which for instance by a biasing spring 5 is urged to sealing and sliding contact against a counter surface 6 on the shaft.

For creating pumping forces striving to repel foreign matters from penetrating through the contact area between sealing edge 4 and the opposed contact surface and also for causing lubricant, that may be contained inside the sealed off space to be kept within the sealed off space, it has earlier been understood that such effects can be achieved by providing a groove pattern in the contact area, which under mutual rotation can cause such pumping forces. As mentioned above this has earlier been provided by arranging in the flexible sealing edge such a groove pattern, which however has had the drawback that the groove pattern will be rapidly worn out whereupon the pumping effect will be lost and it even might have a negative effect on the sealing ability as such.

It now therefore is suggested to provide a groove pattern 7 of desired shape instead in the counter surface 6 against which the sealing edge 4 is sliding. This could of course be made directly in the base material of the counter surface, such as the envelope surface of a shaft by means of cutting machining or by a chemical etching technique.

Both these techniques have some drawbacks, as the mechanical cutting can be circumstantial when working with high strength materials, and the chemical etching may cause chemical corrosion or degradation of the base material at the same time as it can be an environmental threat.

In a preferred embodiment of the invention the groove pattern 7 now therefore is preferably provided with grooves 8 and intermediate ridges 9, which together form a series of arrow shaped grooves which can generate the pumping effect aimed at when the shaft 1 rotates in the housing or when the housing 2 rotates about the shaft, and which, as can be better seen in Fig. 2, the groove pattern wherein the grooves 8 thus are not cut or etched in the base material of the counter surface 6 but are instead formed in that a coating 9 of a hard and wear-resistant material has been deposited upon the base material of the counter surface 6.

The material used for these coating formations can vary but have preferably such properties as high hardness, typically with a Vickers hardness above 1000 HV, low coefficient of friction, typically about 0.1 - 0.2*µ*, good wear resistance, good resistance against oxidation and fretting corrosion and also thermal stability.

Such a material can preferably be a metal mixed diamond like carbon (Me-DLC), and it can preferably be deposited on the base material by means of physical vapour deposition i.e. vaporisation of the material in a vacuum chamber whereupon the vapour is caused to condense on the surface of the base material, which has been prepared with a mask, for giving the desired groove pattern, the technique being about the same as used for semiconductor manufacture. The thickness of the coating can be from 1 to a few *µm.*

Although the invention in this drawing figure has been shown as applied to a shaft supported in a housing, it is evident, that the invention can be used in any other application in which a seal is arranged to seal off a space between two machine members that are movable relative each other and which seal has a sealing edge where such a pumping effect is desired. Thus it is evident that the same technique can be used for sealing off the interior of a bearing, whereby the "housing" forms the outer race ring of the bearing and the "shaft" is the inner race ring thereof.

Furthermore the counter surface with its groove pattern can be arranged in the outer member, and it is also possible that the groove pattern is provided in a separate sleeve (not shown) which is fixedly arranged about the shaft or in the seat of a housing with the groove provided surface facing the seal which is affixed to the opposed machine member.

## Claims

1. A sealing arrangement for sealing off a space between two machine members (1, 2) which are movable relative to each other, which sealing arrangement incorporates a seal (3) fitted to one of the machine members (2), and having a sealing edge (4) arranged to contact a counter surface (6) on the other one of the machine members (1) to slide against this during mutual movement of the machine members, and where a groove pattern (7) is provided at the area of contact between the sealing edge (4) and the counter surface (6) for causing a pumping effect in said area of contact, **characterized therein,**
that the groove pattern (7) is provided in the counter surface (6) opposed to said sealing edge (4).

2. A sealing arrangement as claimed in claim 1,
**characterized therein,**
that the groove pattern (7) is formed as a coating (9) applied on the counter surface (6) by any appropriate depositing method known per se.

3. A sealing arrangement as claimed in claim 1 or 2,
**characterized therein,**
that the coating (9) is provided on the counter surface (6) in form of ridges, each two adjacent ridges (9) forming between them a groove (8). forming bet

4. A sealing arrangement as claimed in anyone of claims 1 to 3,
**characterized therein,**
that the coating (9) consists of a material having lower coefficient of friction, and higher hardness and/or resistance to wear than the base material of the associated machine member (1).

5. A sealing arrangement as claimed in anyone of claims 1 to 4,
**characterized therein,**
that the material used for the coating (5) is metal mixed diamond like carbon (Me-DLC).
